# EUROPÄISCHE PATENTANMELDUNG

(11) **EP 1 691 179 A2**
(43) Veröffentlichungstag der Anmeldung: **16.08.2006**
(21) Anmeldenummer: 06010666.3
(22) Anmeldetag: 26.07.2001
(51) Int. Cl.: G01G 19/414

(54) **Shop scale for handling individual processes**

(30) Priorität: 14.08.2000 DE 10039705
(62) Teilanmeldung aus: 01958025.7
(71) Anmelder: Mettler-Toledo (Albstadt) GmbH, 72458 Albstadt (DE)
(72) Erfinder: Mürdter, Herbert, Tailfingen 72461 Albstadt (DE)
(74) Vertreter: Leinweber & Zimmermann

(57) **Zusammenfassung**

Die Erfindung betrifft ein Gerät, insbesondere Meßgerät, zum Abwickeln einzelner Vorgänge, in deren Verlauf mindestens ein Wert erzeugt wird, mit einer Einrichtung zum Zuordnen der bei der Abwicklung der einzelnen Vorgänge erzeugten Werte zu Vorgängen, wobei der Zuordnungseinrichtung ein Empfänger zum Empfangen von während der Abwicklung der einzelnen Vorgänge in der Umgebung des Geräts erzeugten und die einzelnen Vorgänge identifizierenden ldentifikationssignalen zugeordnet ist und die Zuordnung der Werte zu den Vorgängen auf Grundlage einer Auswertung der Identifikationssignale erfolgt.

## Beschreibung

Die Erfindung betrifft ein Gerät, insbesondere ein Messgerät, zum Abwickeln einzelner Vorgänge nach dem Oberbegriff des Patentanspruchs 1, einen Verbund aus deratigen Geräten und ein mit solchen Geräten durchführbares Verfahren.

Bei der Abwicklung einzelner Messvorgänge mit Hilfe von Messgeräten der vorstehend beschriebenen Art werden in der Regel eine Vielzahl von Messungen durchgeführt, bei denen die Messergebnisse bzw. -werte bzw. auf Grundlage dieser Messergebnisse erzeugte Werte einzelnen Vorgängen zugeordnet werden müssen. Dabei können die Vorgänge beispielsweise einzelnen Benutzern zugeordnet sein. Das bedeutet, dass die Ergebnisse der von einem Benutzer des Gerätes durchgeführten Messungen einem gemeinsamen Vorgang zugeordnet werden. Daneben können die einzelnen Messungen aber auch bestimmten Messabläufen zugeordnet sein, in deren Verlauf mehrere Benutzer das Gerät bedienen. In beiden Fällen umfasst die Kennzeichnungseinrichtung bekannter Geräte der vorstehend beschriebenen Art üblicherweise eine Eingabetastatur durch deren Betätigung die die einzelnen Vorgänge kennzeichnenden Kennzeichnungssignale erzeugt werden, wobei jedem Vorgang eine vorgegebene Taste der Eingabetastatur zugeordnet ist. Dabei können die einzelnen Tasten bestimmten Benutzern des Gerätes oder aber auch bestimmten Bedienungsabläufen zugeordnet sein.

Die gerade beschriebene Bedienung der eingangs angegebenen Geräte kommt beispielsweise bei der Verwendung von preisrechnenden Ladenwaagen vor. Derartige Geräte können beispielsweise in Selbstbedienungsläden mit verschiedenen Verkaufsinseln, in denen ein Verkauf einzelner Waren mit Bedienung stattfindet, etwa für Käse, Frischfleisch, Obst, Gemüse oder dgl., zum Einsatz kommen. Dabei ist es üblich, dass mehrer Verkäufer die selbe Waage benutzen. Dabei kann es vorkommen, dass einer der Verkäufer nach Abschluss der Wägung und Buchung eines ersten Produktes für seinen derzeitigen Kunden das nächste Gut für die Wägung vorbereitet, während ein anderer Verkäufer mit der zuvor von dem ersten Verkäufer benutzten Waage das Gewicht eines Produktes für einen anderen Kunden ermittelt. Diesen Teilvorgang des gesamten Verkaufsvorganges für den betroffenen Kunden schließt der Verkäufer durch Betätigung seiner Verkäufertaste ab. Dadurch wird ein Kennzeichnungssignal erzeugt, auf dessen Grundlage das Wägeergebnis und der daraus ermittelte Kaufpreis dem von dem Verkäufer gerade ausgeführten und dem jeweiligen Kunden zugeordneten Verkaufsvorgang zugeordnet wird. Eine derartige Ablösung kann sich bei der zeitlich überlappenden Abwicklung mehrerer Verkaufsvorgänge mehrmals wiederholen. Hat der Kunde keine weiteren Wünsche mehr, schließt der Verkäufer den diesem Kunden zugeordneten Vorgang ab. Das erfolgt in der Regel durch Betätigung einer bestimmten Taste (Total) der Eingabetastatur des Gerätes und einer Betätigung seiner Verkäufertaste, durch die wiederum ein Kennzeichnungssignal erzeugt wird, welches die Zuordnung der durch Betätigung der entsprechenden Taste erzeugten Abschlusssignals zu diesem Vorgang ermöglicht.

Ist die Waage in einen Verbund eingeschlossen, kann der Verkäufer zur Abwicklung einzelner Teilvorgänge auch andere Waagen benutzen, wenn seine eigene Waage gerade besetzt ist oder ihm dies aus anderen Gründen praktischer zu sein scheint. Auch bei der Benutzung anderer Waagen werden die im Verlauf der Teilvorgänge erzeugten Werte, wie etwa die Gewichtswerte oder Verkaufspreise durch Betätigung der entsprechenden Verkäufertaste und Erzeugung entsprechender Kennzeichnungssignale dem von dem betreffenden Verkäufer gerade abgewickelten Verkaufsvorgang zugeordnet.

Die am Beispiel einer Ladenwaage erläuterten Abläufe kommen in ähnlicherweise auch bei anderen Messgeräten als Ladenwaagen vor, z. B. in Labors, wo Proben verschiedenen Behandlungen unterworfen und verschiedene Messungen am selben oder an verschiedenen Geräten gemacht werden, wobei die Messergebnisse einem gemeinsamen Vorgang zugeordnet werden müssen. Dabei können in dem Labor gleichzeitig mehrer Proben unterwegs sein, so dass eine Zuordnung der einzelnen im Verlauf der für die einzelnen Proben abgewickelten Vorgänge erzeugten Werte zu diesen Vorgängen notwendig ist. Darüber hinaus können die vorstehend anhand von Ladenwaagen erläuterten Abläufe auch bei anderen Verkaufsgeräten, wie etwa bei Kassengeräten vorkommen, bei denen im Verlauf eines Verkaufsvorganges mehrere Verkaufspreise eingegeben und die entsprechende Werte erzeugt werden, während von einem anderen Verkäufer mit dem selben Kassengerät zeitlich überlappend ein weiterer Verkaufsvorgang abgewickelt wird.

Die zusätzliche Tastatureingabe zur Erzeugung der Kennzeichnungssignale vor oder nach den einzelnen Teilvorgängen ist zeitraubend und fehleranfällig. Außerdem sollte die Erzeugung derartiger Zuordnungssignale vertrauenswürdigen Personen vorbehalten bleiben, um einen Missbrauch auszuschließen. Bei mehreren in einem Verbund zusammengeschlossenen Geräten und zahlreichen Benutzern kann es darüber hinaus zu Problemen kommen, wenn die Anzahl der zur Verfügung stehenden Tasten nicht ausreicht, um jedem Benutzer eine Taste zuzuweisen. Dann müssen zur Erzeugung der Kennzeichnungssignale Tastenkombinationen ausgewählt werden, so dass der Benutzer bei jedem Teilvorgang zur Erzeugung der Kennzeichnungssignale mehrere Tasten drücken muss.

Angesichts der vorstehenden erläuterten Probleme im Stand der Technik liegt der Erfindung die Aufgabe zugrunde, eine Weiterbildung der vorstehend erläuterten Geräte bereitzustellen, auf welchen eine rasche und zuverlässige Zuordnung der im Verlauf der einzelnen Vorgänge erzeugten Werte, insbesondere Messwerte bzw. daraus ermittelter Werte, zu den einzelnen Vorgängen ermöglicht.

Erfindungsgemäß wird diese Aufgabe durch die in Anspruch 1 angegebene Weiterbildung der bekannten Geräte gelöst, welche im wesentlichen dadurch gekennzeichnet ist, dass die Kennzeichnungseinrichtung einen Empfänger zum Empfangen von während der Abwicklung der einzelnen Vorgänge in der Umgebung des Gerätes erzeugten und die einzelnen Vorgänge identifizierenden Identifikationssignalen aufweist, auf deren Grundlage die Kennzeichnungssignale erzeugt werden.

Durch diese Weiterbildung werden Geräte der eingangs angegebenen Art gewissermaßen sehend gemach, so dass sie die einzelnen Verkaufsvorgänge selber erkennen und entsprechende Identifikationssignale abgeben können. Die dazu erforderliche Empfangseinrichtung kann in ein auch die übrigen Elemente des Gerätes enthaltendes Gehäuse integriert sein. Darüber hinaus ist jedoch auch an den Einsatz von separaten Empfängern gedacht, welche über Datenleitungen oder drahtlos mit den übrigen Elementen des Gerätes in Verbindung stehen.

Dabei beruht die Erfindung auf der verblüffend einfachen Erkenntnis, dass die Erzeugung der Kennzeichnungssignale durch Betätigung entsprechender Eingabeelemente selbst bei Benutzung der Geräte durch mehrere Benutzer nicht mehr erforderlich ist, wenn die diesen Benutzern zugeordneten Identifikationssignale oder auf andere Art und Weise einzelnen Vorgängen zugeordneten Identifikationssignale in der unmittelbaren Umgebung des Gerätes empfangen werden, weil sich bei der Abwicklung einzelner Teilvorgänge der Benutzer oder ein anderer diesem Vorgang zugeordneter Signalgeber regelmäßig in der Umgebung des Gerätes aufhält, während andere Benutzer bzw. andere Signalgeber sich in einem größeren Abstand von dem Gerät befinden, so dass eine einfache Trennung der von dem jeweils aktiven Signalgeber erzeugten Identifikationssignale von anderen Identifikationssignalen möglich ist.

Zweckmäßigerweise ist dem Empfänger des erfindungsgemäßen Gerätes dazu ein Diskriminator, der empfangenen Signale unterschiedlicher Herkunft und/oder Stärken voneinander unterscheidet, sowie eine Validiervorrichtung, welche aufgrund charakteristischer Merkmale einzelner von dem Diskriminator diskriminierter Signale einen bestimmten Vorgang erkennt, zugeordnet. Dazu können die charakteristischen Unterschiede, welche die Identifikationssignale bestimmter Signalgeber, wie etwa Benutzer, auszeichnen in einem vorausgegangenen Initialisierungsprozess ermittelt und gespeichert worden sein. Ist der Vorgang mit Hilfe der Identifikationssignale einmal erkannt, lässt sich die Zuordnung der bei der Abwicklung des Vorganges erzeugten Werte, meistens die einzelnen Messergebnisse oder daraus ermittelte Verkaufspreise, aber auch den Beginn oder das Ende eines Vorganges anzeigende Steuersignale, zum jeweiligen Vorgang ohne weiteres Zutun automatisch bewerkstelligen.

Wie aus der vorstehenden Erläuterung zum Stand der Technik zu entnehmen ist, kann das erfindungsgemäße Geräte eine Messeinrichtung, insbesondere eine Wägezelle, zum Erzeugen von Messsignalen, wie etwa Gewichtssignalen, aufweisen, wobei die Erzeugung der Werte auf Grundlage dieser Messsignale bzw. Gewichtssignale erfolgt. Dabei können die Werte das Messergebnis oder ein auf Grundlage des Messergebnisses erzeugte Ergebnis, wie etwa den Verkaufspreis einer mit einer preisrechnenden Waage abgewogenen Ware darstellen. Zweckmäßigerweise weist das Gerät dazu eine Steuereinrichtung auf, mit der es zur zeitlich überlappenden Abwicklung von mindestens zwei Vorgängen ansteuerbar ist, von denen mindestens einer zwei Teilvorgänge umfasst, in deren Verlauf jeweils ein Wert erzeugt wird.

In besonders vorteilhafter Ausgestaltung der Erfindung ist der Steuereinrichtung eine Speichereinrichtung zugeordnet, in der die Werte so abgelegt werden, dass sie den von den Kennzeichnungssignalen gekennzeichneten Vorgängen zugeordnet sind. Dazu können einzelne Speicherbereiche der Speichereinrichtung einzelnen Vorgängen fest zugeordnet sein. Alternativ oder zusätzlich ist jedoch auch daran gedacht, den die einzelnen Werte darstellenden Daten den Kennzeichnungssignalen entsprechende Daten hinzuzufügen, um so eine Zuordnung der Werte zu dem von den Kennzeichnungssignalen gekennzeichneten Vorgängen zu ermöglichen. Wie vorstehend im Zusammenhang mit preisrechnenden Ladenwaagen erläutert, weist ein erfindungsgemäßes Gerät zweckmäßigerweise auch eine Steuersignalerzeugungseinrichtung zum Erzeugen von dem Beginn und/oder dem Abschluss eines Vorgangs darstellenden Steuersignalen auf. Diese Steuersignalerzeugungseinrichtung kann beispielsweise in Form einer Eingabetastatur verwirklicht sein.

Wenn der Vorgang auf Grundlage der Identifikationssignale erkannt worden ist, können in dem Gerät für Vorgänge der erkannten Art charakteristische Voreinstellungen vorgeschlagen und auf eine entsprechende Betätigung oder auch automatisch vorgenommen werden. Dazu ist die Steuereinrichtung des Gerätes zweckmäßigerweise so ausgelegt, dass sie ansprechend auf die Identifikationssignale bzw. die auf deren Grundlage erzeugten Kennzeichnungssignale zum Abrufen und/oder Ausgeben von den einzelnen Vorgängen zugeordneten Daten und/oder zur Anpassung von Geräteeinstellungen an die einzelnen Vorgänge betreibbar ist.

Darüber hinaus ist es möglich, dass das Gerät nur für bestimmte Vorgänge freigegeben wird. Dann kann ein Vorgang zwar erkannt jedoch zurückgewiesen werden, weil das Gerät für derartige Vorgänge, beispielsweise für die Benutzung durch bestimmte Bedienungspersonen, nicht freigegeben ist. Dabei kann das Gerät auch die momentanen Einstellungen überprüfen und in Abhängigkeit von diesen Einstellungen ermitteln, ob eine Freigabe für den anhand der Identifikationssignale erkannten Vorgang erfolgen kann.

Wie eingangs bereits erläutert, können die einzelnen Vorgänge einzelnen Bedienungspersonen zugeordnet sein, beispielsweise dann, wenn in einem Verkaufsgeschäft ein Kunde von einer Person bedient wird. In diesem Fall erfolgt die Erzeugung der Identifikationssignale durch die Bedienungsperson selbst oder der Bedienungsperson fest zugeordneten Signalgeber. Daneben ist jedoch auch daran gedacht, Vorgänge einzelnen Kunden zuzuordnen, die im Verlauf des Vorganges von mehreren Bedienungspersonen bedient werden. Für diesen Fall ist es besonders zweckmäßig, wenn dem Gerät mindestens ein, die Identifikationssignale erzeugendes Element, wie etwa ein Behälter zugeordnet ist, in den die Waren eines Kunden abgelegt werden. Darüber hinaus ist auch daran gedacht, die Identiflkationssignale durch die Kunden selbst zu erzeugen.

Grundsätzlich kann die Erzeugung der Identifikationssignale ohne weitere Hilfsmittel erfolgen, sofern dem Empfänger des erfindungsgemäßen Gerätes eine entsprechende Auswertungseinrichtung zugeordnet ist und vorab genügend aussagekräftige Daten erhoben wurden, welche die Erzeugung der Kennzeichnungssignale auf Grundlage der Identifikationssignale erlauben. So könnte beispielsweise die typische Feldverformung des empfangenen Signals durch die Wärmestrahlung der Hand einer bedienenden Person erfasst werden, oder das individuelle Muster des Geflechtes eines Warenkorbes, die Farbe eines Warenkorbes und/oder die Oberflächenbeschaffenheit eines Warenkorbes könnte zur Erzeugung der Identifikationssignale benutzt werden. Entsprechende Auswerteeinrichtungen sind aber aufwendig, wenn Sie eine größere Zahl von Vorgängen mit hoher Zuverlässigkeit voneinander unterscheiden müssen. Daher ist die Erzeugung der Kennzeichnungssignale auf Grundlage der Identifikationssignale einfacher, wenn die Identifikationssignale durch mitgeführte Gegenstände, wie etwa besonders gefärbte Gegenstände erfolgt. So kann z. B. ein besonderer Fingerring einer bedienenden Person zur Erzeugung entsprechender Identifikationssignale benutzt werden.

In diesem Zusammenhang hat es sich als besonders zweckmäßig erwiesen, wenn dem Empfänger des Gerätes ein oder mehrere die Identifikationssignale erzeugende Sender zugeordnet sind. Dabei kann der Sender in Form eines Transponders gebildet sein, der die Identifikationssignale ansprechend auf von einer Sendeeinrichtung des Gerätes empfangene Signale erzeugt. Dabei können der Transponder und die Sendeeinrichtung des Gerätes so genau aufeinander abgestimmt werden, dass mit einfachen, kostengünstigen Geräte und wenig Sendeleistung eine Erkennung zahlreicher Vorgänge mit hoher Zuverlässigkeit möglich ist. Der dem Empfänger zugeordnete Sender bzw. Transponder kann beispielsweise in Form eines Fingerrings oder Armreifs verwirklicht sein.

Ein Verbund von erfindungsgemäßen Geräten weist zweckmäßigerweise Mittel zum Austauschen von Daten zwischen diesen Geräten und eine vorzugsweise durch eines der Geräte gebildete zentrale Einrichtung auf, mit der die an den Geräten erzeugten und einzelnen Vorgängen zugeordneten Werte abgerufen, ausgegeben und/oder zur weiteren Verarbeitung einem gesonderten System zugeführt werden. Dabei können mindestens zwei Geräte des Verbundes jeweils eine Sendeeinrichtung aufweisen, wobei diesen Sendeeinrichtungen mindestens ein Transponder zugeordnet ist, der ansprechend auf die von den Sendeeinrichtungen gesendete Signale die Identifikationssignale erzeugt.

Bei Einsatz eines erfindungsgemäßen Verbundes ist die Abwicklung einzelner Vorgänge nicht an ein einziges Gerät gebunden, weil dank der Erzeugung der Kennzeichnungssignale bzw. der Validierung der entsprechenden Vorgänge bei jedem einzelnen Teilvorgang die Zuordnung zum richtigen Vorgang möglich ist, auch wenn ein anderes Gerät benutzt wird. Des weiteren ist es möglich, eine Mehrzahl von Vorgängen an einer dafür vorgesehenen Stelle im Verbund - die auch ein beliebiges der miteinander verbundenen Geräte sein kann - nachträglich zusammenzuführen. Das kann beispielsweise dazu dienen, die von ein und demselben Kunden an verschiedenen Orten abgewickelten Teilvorgänge eines Einkaufsvorganges, z. B. die dem Kunden an der Fleischtheke, der Gemüsetheke oder dem Delikatessenstand verkauften Waren, gemeinsam auszuwerten oder am Ende eines Tages die von einer bestimmten Person abgewickelten Vorgänge statistisch zu erfassen.

In einem erfindungsgemäßen Verbund ist es besonders vorteilhaft, Transponder zu benutzen, welche die die einzelnen Vorgänge identifizierenden Identifikationssignale erzeugen, weil in einem entsprechenden Verbund üblicherweise mehr Vorgänge bzw. mehr Benutzer des Systems auseinandergehalten werden müssen. Überdies kann es im Verbund notwendig sein, zu bestimmten Geräten Zulassungsbeschränkungen für gewisse Vorgänge einzuführen, was mit der Verwendung von Transpondern mit größerer Zuverlässigkeit geschehen kann. Nachstehend wird die Erfindung anhand eines Beispiels eines erfindungsgemäßen Verbundes von Ladenwaagen erläutert, wobei diese Erläuterung nicht als Beschränkung der Tragweite der Erfindung auf dieses Bespiel zu verstehen ist.

In einem Ladengeschäft, in dem die Kunden in Selbstbedienung Lebensmittel einkaufen können, sind für den Offenverkauf von Käse, Frischfleisch, Delikatessen usw. bediente Verkaufsinseln vorhanden, die mit einer oder mehreren preisrechnenden Ladenwaagen ausgerüstet sind. Obst und Gemüse suchen die Kunden selber aus und wägen das Gut auf den bereitstehenden Ladenwaagen. Die Waagen der Verkaufsinseln sind mit Sende-/Empfangseinrichtung samt einer Auswerteschaltung ausgerüstet. Die Sende-/Empfangseinrichtung und die zugehörige Auswerteschaltung kann alleinstehend in der Nähe des die Wägezelle enthaltenden Teils der Waage aufgebaut sein oder in ein entsprechendes Gehäuse integriert werden. Die die Waage bedienende Person trägt einen Transponder, der auf die Sende-/Empfangseinrichtung abgestimmt ist. Die Auswerteschaltung vermag die durch den Transponder veränderten Signale der Sende-/Empfangseinrichtung auseinanderzuhalten und mit großer Zuverlässigkeit zu erkennen, welcher Transponder sich gerade in der Nähe befindet. Der Transponder ist mit Vorteil z. B. in einen Fingerring oder ein Armband eingebaut, so dass mit ihm bei jeder Annäherung der Hand an die Waage der Empfang der durch den Transponder erzeugten Identifikationssignalen stattfinden kann. Eine gleichartige Waage kann auch an der Kassierstation am Ausgang des Selbstbedienungsladens bereitgestellt werden.

Ein Kunde, der Käse kaufen will, wendet sich an den Verkäufer. Dieser löst an der Waage einen neuen Vorgang aus. Das kann beispielsweise durch Betätigung einer Bedienungstaste erfolgen. Dank der automatischen Erkennung des Verkäufers bzw. des diesem Verkäufer zugeordneten Verkaufsvorganges mit dem erfindungsgemäßen Gerät braucht der Verkäufer keine weitere Anmeldung bzw. Zuordnung einzugeben, weil entsprechende Identifikationssignale automatisch von dem Gerät empfangen und ausgewertet werden.

Zur Sicherheit kann jedoch die Waage anzeigen, wen sie gerade erkannt hat. Sollte die auf Grundlage der von dem Verkäufer ausgehenden Identifikationssignale erfolgte Erkennung des Käufers wider Erwarten nicht korrekt sein, kann ein Korrekturvorgang in Gang gesetzt werden. Der Verkäufer wird nun wiederholt zubereiteten Käse als Wäggut auf die Waage legen und einen das Gewicht des Käses darstellenden Messwert ermitteln, sowie weitere Werte erzeugen, insbesondere den auf Grundlage des Gewichtes berechneten Preis. Dabei werden diese einzelnen Teilvorgänge durch Betätigung einer Buchungstaste abgeschlossen. Jeder der abgeschlossenen Teilvorgänge wird mit Hilfe der von dem Verkäufer ausgehenden Kennzeichnungssignal automatisch dem selben Vorgang zugeordnet. Nach einer Wägung ist der Verkäufer damit beschäftigt, das nächste Wäggut vorzubereiten. In dieser Zeit kann ein weiterer Verkäufer die Waage in der selben Weise benutzen. Während der erste Verkäufer noch die nächste Portion Käse zubereitet, eröffnet der zweite einen neuen Vorgang und nimmt die erste Wägung dafür vor. Mit Hilfe des erfindungsgemäßen Gerätes wird auf Grundlage der von dem anderen Verkäufer ausgehenden Identifikationssignale automatisch erkannt, dass es sich um einen anderen Vorgang handelt. Im folgenden ordnet die Waage die jeweiligen Wägungen den einzelnen Vorgängen zu.

Die Käse-Verkaufsinsel kann zwei oder mehr Waagen aufweisen, die miteinander verbunden sind. Dieser Verbund kann Daten der Waagen speichern und untereinander austauschen. Das erlaubt dem ersten Verkäufer mit dem nächsten Stück Käse zu einer anderen Waage auszuweichen, wenn die erste Waage, mit der er den Vorgang eröffnet hat, gerade besetzt ist. Auch dieser Ablauf kann mit einem erfindungsgemäßen Verbund auf erfindungsgemäßen Geräten abgewickelt werden. Die weitere Waage empfängt die von dem jeweiligen Verkäufer ausgehenden, beispielsweise mit Hilfe eines von dem Verkäufer getragenen Transponders erzeugten Identifikationssignale und kann dank dem Datenaustausch im Verbund die im Verlauf des an dieser weiteren Waage ausgeführten Teilvorganges erzeugten Werte dem an der anderen Waage begonnenen Vorgang zuordnen. Durch Betätigung einer entsprechenden Taste einer Eingabetastatur, z. B. durch Betätigen der Taste "Total" kann ein Steuersignal erzeugt werden, welches den Abschluss eines Vorganges anzeigt.

Bei einer anderen Ausführungsform der Erfindung werden entweder die Einkaufskörbe mit einem Transponder versehen oder dem Kunden ein solcher mitgegeben, beispielsweise in Form einer beschichteten Karte. An den Verkaufsinseln werden dann die Einkaufskörbe oder die Karten an die dafür vorgesehen Stellen platziert. Dabei wird der Vorgang durch den Kunden selbst bzw. seinen Einkaufkorb oder seine Karte definiert. Dabei macht es vorerst keinen Sinn, die Waage zu wechseln oder einen weiteren Vorgang auf der selben Waage abzuwickeln. Hingegen zeigt sich der Vorteil im Geräteverbund. Am Ausgang wird der Transponder des Kunden wiederum identifiziert, indem der Einkaufskorb oder die Karte in die entsprechende Stellung gebracht wird. Die Geräte sind so untereinander verbunden, dass zumindest ein Gerät am Ausgang alle an den anderen Geräte im Verbund abgewickelten Teilvorgänge für den eben erkannten Transponder abrufen kann. Die Gesamtheit der Teilvorgänge für diesen Kunden bzw. Transponder lässt sich so totalisieren. Dieses Vorgehen hat den weiteren Vorteil, dass dem Kunden alle tatsächlich bezogenen Waren auch verrechnet werden. Andernfalls könnte er seinen Teileinkauf, z. B. den Käse, den er böswillig oder aus Versehen bereits in die Einkaufstasche gelegt hat, an der Kasse vorbeischmuggeln.

Selbstverständlich lassen sich die vorstehend erläuterten Ausführungsformen der Erfindung auch miteinander kombinieren. Die Transponder der Kunden und der Verkäufer können je eine Klasse für sich bilden. Die Geräte, wie etwa die Ladenwaagen, können dann einen Vorgang sowohl mit den Angaben zum Kunden als auch mit denjenigen zum Verkäufer identifizieren. Der Transponder des Kunden wird an der Verkaufsinsel dann nur für die Eröffnung des Vorgangs benötigt, danach läuft alles wie weiter oben geschildert mit dem Transponder des Verkäufers ab. Die Totalisierung aller Teilvorgänge hingegen geschieht mittels der Identifizierung des Kundentransponders. Gleichwohl können über den Verbund verkäuferbezogene Abfragen gemacht werden, z. B. die Zahl der von den einzelnen Verkäufern abgewickelten Teilvorgänge am Ende des Tages.

## Patentansprüche

1. Gerät, insbesondere Meßgerät, zum Abwickeln einzelner Vorgänge, in deren Verlauf mindestens ein Wert erzeugt wird, mit einer Einrichtung zum Zuordnen der bei der Abwicklung der einzelnen Vorgänge erzeugten Werte zu Vorgängen, **dadurch gekennzeichnet, daß** der Zuordnungseinrichtung ein Empfänger zum Empfangen von während der Abwicklung der einzelnen Vorgänge in der Umgebung des Geräts erzeugten und die einzelnen Vorgänge identifizierenden Identifikationssignalen zugeordnet ist und die Zuordnung der Werte zu den Vorgängen auf Grundlage einer Auswertung der Identifikationssignale erfolgt.

2. Gerät nach Anspruch 1, **gekennzeichnet durch** eine zum Erzeugen von die einzelnen Vorgänge kennzeichnenden Kennzeichnungssignalen betreibbare Kennzeichnungseinrichtung, wobei die Zuordnungseinrichtung zum Zuordnen der Werte zu den Vorgängen auf Grundlage der Kennzeichnungssignale betreibbar ist und die Kennzeichnungseinrichtung den Empfänger zum Empfangen der Identifikationssignale aufweist und zum Erzeugen der Kennzeichnungssignale auf Grundlage der Identifikationssignale betreibbar ist.

3. Gerät nach Anspruch 1 oder 2, **gekennzeichnet durch** eine Meßeinrichtung, insbesondere Wägezelle, zum Erzeugen von Meßsignalen, wie etwa Gewichtssignalen, auf deren Grundlage der mindestens eine Wert erzeugt wird.

4. Gerät nach einem der Ansprüche 1 bis 3, **gekennzeichnet durch** eine Steuereinrichtung, mit der das Gerät zur zeitlich überlappenden Abwicklung von mindestens zwei Vorgängen ansteuerbar ist, von denen mindestens einer mindestens zwei Teilvorgänge aufweist, in deren Verlauf jeweils ein Wert erzeugt wird.

5. Gerät nach Anspruch 4, **dadurch gekennzeichnet, daß** der Steuereinrichtung eine Speichereinrichtung zugeordnet ist, in der die Werte derart abgelegt werden, daß sie den von den Kennzeichnungssignalen gekennzeichneten Vorgängen zugeordnet sind.

6. Gerät nach einem der vorhergehenden Ansprüche, **gekennzeichnet durch** eine Steuersignalerzeugungseinrichtung zum Erzeugen von den Beginn und/oder den Abschluß eines Vorgangs darstellenden Steuersignalen.

7. Gerät nach einem der vorhergehenden Ansprüche, **dadurch gekennzeichnet, daß** die Kennzeichnungseinrichtung eine Sendeeinrichtung zum Senden von die Erzeugung der Identifikationssignale veranlassenden Signalen aufweist.

8. Gerät nach einem der Ansprüche 4 bis 7, **dadurch gekennzeichnet, daß** die Steuereinrichtung ansprechend auf die Kennzeichnungssignale zum Abrufen und/oder Ausgeben von den einzelnen Vorgängen zugeordneten Daten und/oder zur Anpassung von Geräteeinstellungen an die einzelnen Vorgänge betreibbar ist.

9. Gerät nach einem der vorhergehenden Ansprüche, **dadurch gekennzeichnet, daß** dem Gerät mindestens ein die Identifikationssignale erzeugendes Element, wie etwa ein Behälter, zugeordnet ist.

10. Gerät nach einem der vorhergehenden Ansprüche, **dadurch gekennzeichnet, daß** das Gerät zum Empfangen von einzelnen, die Vorgänge abwickelnde Gerätebenutzer identifizierenden Identifikationssignalen betreibbar ist.

11. Gerät nach einem der vorhergehenden Ansprüche, **dadurch gekennzeichnet, daß** dem Empfänger mindestens ein die Identifikationssignale erzeugender Sender zugeordnet ist.

12. Gerät nach Anspruch 11, **dadurch gekennzeichnet, daß** der Sender in Form eines Transponders gebildet ist, der die Identifikationssignale ansprechend auf von der Sendeeinrichtung des Geräts empfangene Signal erzeugt.

13. Gerät nach Anspruch 11 oder 12, **dadurch gekennzeichnet, daß** der Sender in Form eines Fingerrings oder Armreifs verwirklicht ist.

14. Gerät nach einem der vorhergehenden Ansprüche, **dadurch gekennzeichnet, daß** die Werte Meßergebnisse darstellen, die in Labors, wo Proben verschiedenen Behandlungen unterworfen und verschiedene Messungen am selben Gerät oder an verschiedenen Geräten gemacht werden, erhalten werden, wobei die von einzelnen Proben erhaltenen Meßergebnisse einem gemeinsamen Vorgang zugeordnet werden.

15. Verbund von Geräten nach einem der vorhergehenden Ansprüche, mit Mitteln zum Austauschen von Daten zwischen den Geräten und einer vorzugsweise durch eines der Geräte gebildeten zentralen Einrichtung, mit der die an den Geräten erzeugten und einzelnen Vorgängen zugeordneten Werte abgerufen, ausgegeben und/oder zur weiteren Verarbeitung einem gesonderten System zugeführt werden.

16. Verbund nach Anspruch 15, **dadurch gekennzeichnet, daß** mindestens zwei Geräte jeweils eine Sendeeinrichtung aufweisen, wobei diesen Sendeeinrichtungen ein Transponder zugeordnet ist, der ansprechend auf die von den Sendeeinrichtungen gesendeten Signale die Identifikationssignale erzeugt.

17. Verfahren zum Untersuchen von Proben in Labors, bei dem Meßergebnisse mit einem Gerät gemäß Anspruch 14 erfaßt und einzelnen Vorgängen zugeordnet werden.
